# EUROPEAN PATENT APPLICATION

(11) **EP 2 589 949 A1**
(43) Date of publication of application: **08.05.2013**
(21) Application number: 11187687.6
(22) Date of filing: 03.11.2011
(51) Int. Cl.: G01N 21/07, G01N 21/03

(54) **Vessel with optimized measurement window for optical analysis**

(71) Applicant: Qiagen GmbH, 40724 Hilden (DE)
(72) Inventor: The designation of the inventor has not yet been filed
(74) Representative: Gille Hrabal

(57) **Abstract**

The present invention relates generally to vessels for optical measurements and to a method for using and manufacturing such vessels. More specifically the invention relates to vessels utilized in optical measurements such as fluorescence-based polymerase chain reaction (PCR) methods. The vessel according to the invention comprises an opening and a reduced volume region which is arranged in such a way that during measurement a sample is contained therein or at least moved thereto.

## Description

The present invention relates generally to vessels for measurements especially optical measurements and to a method for using and manufacturing such vessel. More specifically the invention relates to vessels utilized in fluorescence-based polymerase chain reaction (PCR) methods.

Vessels, such as centrifuge tubes or cuvettes, generally hold a liquid sample material for further processing and measurement both manually and automatically. Such vessels are known in various shapes, dimensions and holding capacities.

Document US 5,571,479, for example, discloses a cuvette for optical measurements that comprises two plane walls parallel to each other to improve the optical properties of the cuvette.

When the vessels are operated on a centrifugal platform such that a measurement is carried out during rotation of the vessels, it is also known to position the vessels in a tilted manner to compensate for the effects caused by centrifugal forces.

However, the sensitivity and repeatability of the measurements achieved in this manner leave room for improvements especially when the vessels are utilized in a wide range of applications with various sample volumes.

The object of the invention is to provide an improved vessel for accurate and consistent measurements and a method for manufacturing such a vessel.

The object of the invention is achieved by the vessel according to claim 1. Further embodiments of the invention are recited in the dependent claims. The vessel comprises an opening and a reduced volume region which is arranged in such a way that during measurement a sample is contained therein or at least moved thereto.

The reduced volume region encompasses a volume in the vessel that is considerably smaller than the overall vessel volume. In particular, the width of the reduced volume region is smaller than the width of the remaining vessel body.

The vessel according to the invention has the advantage that a sample disposed in the vessel is substantially gathered in the reduced volume region or at least moved thereto during measurement. Measurements using vessels generally require a sufficient sample volume especially in optical measurements where specific vessel regions are measured in order to yield accurate and consistent measurement results. The measurement results may vary especially when relatively small sample volumes are provided in the vessel particularly the region that is being measured. By providing a reduced volume region, only a minimum sample volume that is approximately equal to the reduced volume region is necessary to conduct an accurate measurement. Furthermore, the vessel can be utilized with various sample volumes as long as the minimum sample volume is provided, enabling the usage of the vessel for various applications. Especially when the vessel is operated on a centrifugal platform, measurements can be impeded by the sample inside the vessel being shifted and pushed against the wall due to the centrifugal forces. The reduced volume region is preferentially aligned facing away from the center of rotation. This leads to the sample being moved to the reduced volume region during rotation in a reliable manner. The available sample volume is therefore gathered in the reduced volume region during rotation of the vessel, whereby accurate and reproducible measurements are possible despite the effects due to the centrifugal forces.

The vessel may be aligned in an upright, vertical position during measurement. The vertical alignment of the vessels enables a space efficient arrangement of the vessels in the measuring system. In a tilted alignment of the vessel more space is required for the measurement system. Accordingly, the number of useable vessels in this case is limited by the tilted alignment. The upright, vertical position of the vessels leads to a compact arrangement of the vessels in the measuring system as more vessels can be arranged next to each other, for example on a centrifugal platform. Furthermore, the tilted alignment of vessels generally leads to a complex layout for the measurement system as a corresponding source and sensor have to be aligned accurately relative to the vessel under measurement. A positioning of the vessel in such a measurement system is critical for accurate measurement results as positional deviations directly affect the measurement results. The upright, vertical position of the vessels enables a reliable and simple positioning of the vessels in the measurement system, thereby reducing the susceptibility to errors caused by improper positioning of the vessels.

The tilted alignment of the vessels, however, generally requires smaller sample volumes than an upright, vertical alignment especially when the vessels are utilized on a centrifugal platform. In some embodiments, the vessels may therefore be aligned in a tilted manner. The reduced volume region of the vessel, in particular the bottom of the vessel, is preferably directed away from the centre of vessel rotation to facilitate the accumulation of the sample material therein during rotation.

The measurement of the vessel is preferentially an optical measurement, but may also be realized by other methods. In a preferred embodiment, the reduced volume region is adapted for transmission of an excitation and/or measurement signal to provide a measurement window. An excitation and/or measurement signal within the meaning of the invention may be any electromagnetic radiation such as infrared radiation, visible light and/or ultraviolet radiation. The excitation signal may be generated by a source for an electromagnetic radiation such as a light source with the desired properties. The excitation signal radiated on the vessel especially the measurement window can lead to a corresponding emittance of a measurement signal by the sample inside. For example, in quantitative PCR the amplification of targeted DNA molecules is measured by the fluorescence emitted from a sample. The detection of the measurement signal may be realized by a sensor such as a photometer. By arranging the excitation and/or measuring signal at the reduced volume region, a measurement window for the vessel is obtained. The measurement window enables precise measurement results as short and unobstructed optical pathways for the excitation and/or measurement signals are being provided.

In an embodiment, the measurement window is formed by a projecting and/or narrowing cross section of the vessel. The measurement window of the vessel may project outwardly and/or become narrow in any direction of the vessel such that the cross section of the vessel body projects outwardly and/or becomes narrow to form a reduced volume region in comparison to the overall vessel volume. The projection and/or narrowing of the measurement window render(s) possible the formation of reduced volume regions for the vessel in various shapes and sizes and has the effect that during measurement a sample is contained therein or at least moved thereto to facilitate accurate measurements.

In another embodiment, the measurement window is formed by a projecting and/or widening cross section of the vessel. The measurement window of the vessel may project outwardly and/or become wider in any direction of the vessel such that the cross section of the vessel body projects outwardly and/or becomes wider to form a reduced volume region in comparison to the overall vessel volume. The projection and/or widening of the measurement window render(s) possible the formation of reduced volume regions for the vessel in various shapes and sizes and has the effect that during measurement a sample is contained therein or at least moved thereto to facilitate accurate measurements. The measurement window preferably widens gradually in outward direction towards a distal end of the measurement window. The distal end of the widened measurement window is preferentially aligned facing away from the center of rotation when utilized on a centrifugal platform.

In an embodiment, the measurement window may comprise a material, coating and/or surface structure adapted for improved transmission of an excitation and/or measurement signal especially in comparison with the remaining vessel. For example, the measurement window may comprise a material, coating and/or surface structure which specifically enhances the transmission properties especially the transparency for an optical measurement. Optionally, the remaining vessel body may feature a material, coating and/or surface structure with shielding properties so as to reduce stray radiations. This improves the accuracy and reliability of an optical measurement conducted via the measurement window by providing an optimized optical pathway for the transmission of an excitation and/or measurement signal.

In a preferred embodiment, the measurement window is provided at the lower part of the vessel, especially such that it forms the bottom of the vessel. The measurement window may therefore also extend the bottom of the vessel in this regard. Preferentially the measurement window is contained in the lower part of the vessel to gain a sufficiently reduced volume region in the vessel. The arrangement of the measurement window in the lower part of the vessel ensures that a sample material disposed in the vessel can easily accumulate in the measurement window especially when small sample volumes are used. When the measurement window is provided to form the bottom of the vessel, the necessary amount of sample material can be reduced to a minimum. By providing the measurement window at the lower part of the vessel an accurate positioning of the vessel within a measurement system is improved as well. In this way, source and sensor of the measurement system can easily be aligned in respect of the vessel, thereby allowing an accurate positioning of the vessel in a reliable manner.

In an embodiment, the measurement window comprises at least one substantially flat surface adapted for the transmission of an excitation and/or measurement signal. The flat surface may be slightly concave or convex to such an extent that the transmission of an excitation and/or measurement signal is ensured. Preferentially the flat surface is within a 10 percent deviation of the inner diameter from a totally flat surface. The source for an excitation signal is preferentially aligned approximately perpendicular to the flat surface. Likewise, the sensor or detector of a measurement signal may also be aligned approximately perpendicular to the corresponding flat surface. The flat surface can reduce scatter and diffusion, thereby improving the transmission of an excitation and/or measurement signal. Thus, the sensitivity and accuracy of the measurements can be increased.

The flat surface of the measurement window may be aligned parallel to the vertical axis of the vessel to allow a simple positioning within the measurement system. Preferentially the vessel is radiated from below, which means that the excitation signal enters the vessel mainly from the bottom of the vessel especially at the measurement window. The detection of the measurement signal is then preferably realized by a substantially flat surface which is aligned parallel to the vessel axis. In this way, the source for the excitation signal as well as the sensor for the measurement signal can easily be aligned and focused on the vessel especially the measurement window, without leading to a complex layout of the measurement system. Likewise, the position of source and sensor for the excitation and measurement signal can also be interchanged advantageously. In another embodiment, the measurement window comprises two flat surfaces to facilitate the transmission of an excitation and measurement signal in the abovementioned manner.

The excitation of the vessel and the corresponding detection of a measurement signal may be implemented by a confocal measurement setup, i.e. the optical paths of excitation and detection substantially run in parallel as opposed to a perpendicular alignment. Excitation signal and the emitted detection signal may therefore be aligned on top of each other. To enhance the excitation of the sample, the vessel may be radiated from more than one direction such as to yield an even illumination from several sides. Likewise, the emitted detection signal may be detected across a wide detection unit or several sides of the vessel, permitting accurate measurement results independent of the vessel position.

The width or diameter of the flat surface for the excitation and/or measurement signal which is arranged at the measurement window is preferably at least 1 .0 mm to enable a reliable transmission of a corresponding signal. The diameter of the flat surface may also equal the width of the measurement window. The flat surface may be provided as a generally oval or round shape, so that an excitation and/or measurement signal can easily be focused on the flat surface.

In an embodiment, the reduced volume region especially the measurement window encompasses a volume of at least 1 *µ*l. Preferentially the volume of the measurement window is not more than 50 *µ*l. The overall vessel volume is preferably not more than 200 *µ*l. Alternatively, the reduced volume region especially the measurement window encompasses a volume of less than 1/4, more preferably 1/5 of the overall vessel volume. By providing a defined volume for the measurement window, it is ensured that the measurement window comprises a sufficient minimum sample volume to allow precise and reproducible measurement results and can be utilized in various applications with different necessary sample volumes.

In another embodiment, the measurement window is formed as a cylinder projecting outwardly. The cylinder may be substantially circular, elliptic or oval. The distal end of the cylinder is preferentially used as a flat surface for the transmission of an excitation and/or measurement signal. The measurement window in form of a cylinder can easily be radiated with an excitation signal along the body of the cylinder especially from the bottom of the vessel, while the distal end of the cylinder allows the usage as a flat surface in the aforementioned manner. In an embodiment, the measurement window comprises a slope tapering towards the distal end of the measurement window. The slope may also be formed as a flat surface. The slope enhances the manufacturing of the vessel as it can function as a mold draft.

The length of the measurement window is preferably less than the width of the vessel body. The length of the measurement window generally relates to the projection and/or narrowing and/or widening of the cross section in outward or radial direction of the vessel. More particularly, the length of the measurement window is at least 0,5 mm. This leads to the formation of a sufficiently reduced volume region in comparison to the overall vessel volume.

In an embodiment, the width of the measurement window is less than the width of the vessel body, preferably less than half the width. The width generally relates to the thickness or diameter of the measurement window. More particularly, the width of the measurement window is mainly related to the circumferential direction of the vessel. The width of the measurement window is preferably more than 1 mm to provide a suitable space in the measurement window especially for optical measurements.

In another embodiment, the height of the measurement window is less than half the height of the vessel body. The height of the measurement window generally relates to the vertical dimension of the vessel. This results in a sufficiently reduced volume region for the measurement window in comparison to the overall vessel volume to offer the above described advantageous effects.

To simplify the manufacturing of the vessel, the height of the measurement window may extend to the opening of the vessel in another embodiment of the invention. The length and the width of the measurement window are in this case substantially smaller than the height in order to form a sufficiently reduced volume region in comparison to the overall vessel volume.

The vessel body apart from the measurement window may feature the customary shape found in vessels and cuvettes such as a round or square cross section. The vessels body can thereby be handled and utilized in an ordinary manner. The diameter of the vessel body is preferably at least 1,5 mm, more preferably at least 2,5 mm to enable a pipetting of the vessel. The height of the vessel is preferably at least 8 mm to enable the usage of the vessel in a range of applications requiring various sample volumes. The height of the vessel preferably does not exceed 40 mm in order to allow the vessels to be utilized in customary measurement systems.

Instead of or in addition to the various vessel shapes described above, the vessel body apart from the measurement window may have a generally oval cross section. The oval cross section increases the available volume in vessels while the vessels can still be arranged in a compact and space efficient manner, for example on a centrifugal platform of a PCR instrument. The oval shaped vessels bodies preferentially maintain the length at the small cross section and mainly increase the length at the long cross section of the oval shape.

Preferentially the vessels are manufactured from a plastic material such as polyolefins, polycarbonates, polyesters, polyamides, polyvinylchlorides. Other suitable materials are cyclic olefin copolymers, polypropylene, PMP, graphene and similar materials. The material may be chosen and combined to obtain the desired properties like optical clarity, expenditure in manufacturing and thermal stability under the conditions of use. Preferably the material is heat-stable up to 140° C and particularly transparent for UV and visible light.

The vessels may be manufactured in customary manner by injection molding. In order to improve the manufacturing of vessels with complex shapes particularly comprising undercuts, the vessels are preferably manufactured by blow molding or injection blow molding. Due to the dimensions of the vessels, the preferred manufacturing method is micro blow molding. Micro blow molding generally comprises the steps of providing a thermoplastic material, preforming the material by injection molding, disposing the preform in a mold for the final shape of the vessel and injecting a gaseous substance into the perform to mold the vessel. This allows the manufacturing of the vessels with a high shape accuracy and the desired dimensions especially in the micrometre scale.

Preferably the preform is heated before disposing it in the mold for the final shape of the vessel. By injecting the gaseous substance such as air or inert gas the final vessel shape is molded. After stabilization of the vessel by sufficient cooling, the vessel can be demolded. To further improve demolding of complex vessel shapes, the mold may be a clam-shell construction.

Due to the crucial impact that the exact alignment of the vessel has on the optical measurement, the vessel may further comprise alignment means for accurately aligning the vessel in an optical pathway of a measurement system. The alignment means may be implemented by the shape of the vessel without taking into account the measurement window such as a polygonal cross section. The vessel may also comprise recesses, or protrusions to allow a fast and simple alignment of the vessel.

In an embodiment, several vessels may also be interconnected to form a strip of vessels. The hinges of the strip are preferentially flexible to allow an easy insertion of the strip in a centrifugal platform such as a thermocycler.

Several vessels may also be connected to form a ring structure. The ring structure can easily be utilized on a centrifugal platform reducing the setup time. In addition, the fabrication of the vessels especially in form of a ring structure can be implemented advantageously by the method according to the invention.

The optical measuring system for analyzing a sample in the vessel may comprise a source for an excitation signal such as a light source, a sensor for detecting a measurement signal such as a photometer and optionally a centrifugal platform for rotating the vessel. When the vessel is utilized in a fluorescence-based PCR method, the system may further comprise a temperature-regulated chamber (thermocycler).

The above and other features of the present invention and various advantages will be more apparent upon consideration of the following description, taken in conjunction with the accompanying drawings in which:
FIG. 1 illustrates a vessel with a projecting measurement window;
FIG. 2 illustrates another vessel with a projecting measurement window;
FIG. 3 illustrates a vessel with a narrowing measurement window
FIG. 4 illustrates a vessel with a measurement window extending to the opening of the vessel,
FIG. 5 illustrates a vessel with a widening measurement window;
FIG. 6 is a schematic view of an arrangement of multiple vessels illustrated in FIG. 5.

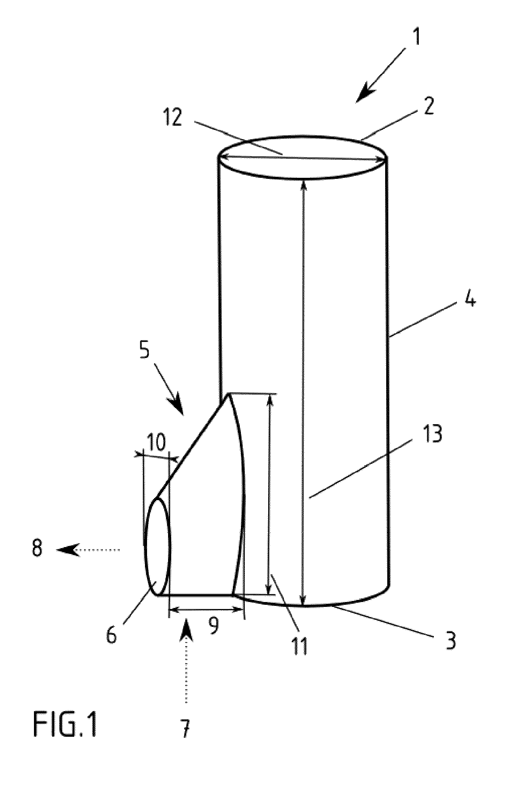

FIG. 1 illustrates the vessel 1 with an opening 2 at the top of the vessel and a closed bottom 3. The opening 2 can be sealed with a cap or insertion element in order to prevent contamination during handling and processing. The vessel body 4, not taking into account the reduced volume region in form of a measurement window 5, is generally shaped as a customary vessel. The vessel body 4 features a regular cylinder shape. In an embodiment, the vessel body 4 can be shaped as an elliptic or oval cylinder, wherein the cross section has an oval shape to increase the available volume in the vessel. The measurement window 5 is arranged at the lower part of the vessel finishing with the closed bottom 3 to easily accumulate a sample disposed in the vessel 1. The measurement window 5 projects outwardly from the vessel body 4 in radial direction as the length 9 of the measurement window 5, wherein the length 9 is less than a width of the vessel 12 such as a diameter. The width 12 of the vessel body 4 generally relates to the smallest distance across the cross section of the vessel body 4. The width 10 of the measurement window 5 is the thickness of the measurement window 5 in substantially circumferential direction of the vessel 1. The height 1 1 of the measurement window 5 is less than the height 13 of the vessel body 4. The excitation signal 7 enters the measurement window 5 from below. The excitation signal 7 may be generated by a source for an electromagnetic radiation such as a light source which is positioned under the vessel 1. The measurement signal 8 generated by the sample inside the vessel 1 is preferably measured at a substantially flat surface 6 which is aligned parallel to the vertical axis of the vessel 1 at the distal end of the reduced volume region 5. This makes it possible to align the sensor for the measurement signal 8 in a space efficient manner in the measurement system. Alternatively, the measurement window 5 may also comprise a substantially flat surface for the excitation signal 7 to further reduce scatter and diffusion. In an embodiment, the measurement signal 8 may be detected from the bottom of the vessel especially the measurement window 5. The corresponding excitation signal 7 may then enter the measurement window 5 from the substantially flat surface 6 provided at the distal end of the measurement window 5. In another embodiment, the excitation and detection signal are aligned in a confocal manner, that is excitation signal 7 and the emitted measurement signal 8 are substantially aligned in parallel. To further enhance the excitation of the sample, the excitation signal 7 may illuminate the vessel 1 especially the measurement window 5 from more several sides. The measurement window 5 features a sloped surface tapering towards the distal end of the measurement window 5 to facilitate an easy manufacturing of the vessel 1.

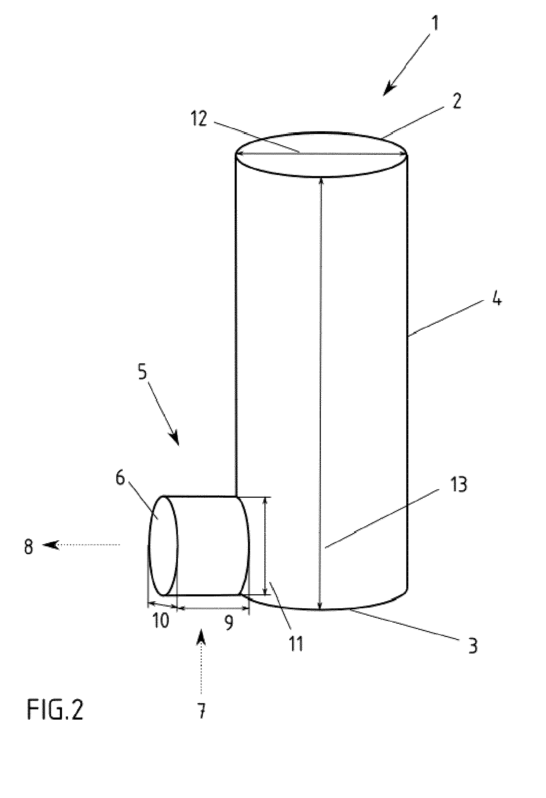

FIG. 2 illustrates another embodiment in which the measurement window 5 projects outwardly in form of an elliptical or oval cylinder. The cylinder of the measurement window 5 is preferably aligned perpendicular to the vertical axis of the vessel 1 to enable a compact alignment of the measurement system. The width 1 0 of the measurement window 5 is equal to the diameter of the flat surface 6 which is used for the transmission of the measurement signal 8. The length 9 of the measurement window 5 is less than the diameter 12 of the vessel body 4. The height 11 of the measurement 5 is less than half the height 13 of the vessel body 4. The cylindrical shape of the measurement window 5 ensures that small amounts of the sample material are accumulated therein especially when the vessel 1 is utilized on a centrifugal platform. The vessel can therefore be used in various applications with different sample volumes. The outward projection of the measurement window 5 may also be realized as a generally circular cylinder.

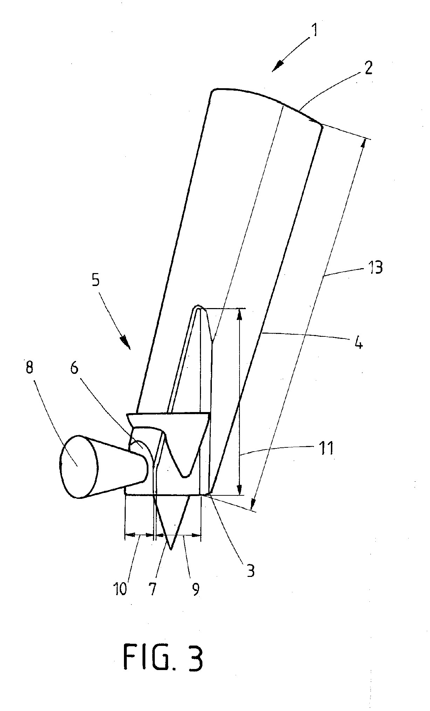

FIG. 3 illustrates another embodiment of the vessel 1 which may be aligned in a tilted manner to reduce the required sample volume for accurate measurements to a minimum. The closed bottom 3 of the vessel is formed as a substantially flat surface to improve the transmission properties for the excitation signal 7. The measurement signal 8 emitted from the flat surface 6 is aligned perpendicular to the excitation signal 7, allowing a simple positioning of the vessel 1 in the measurement system. The measurement window 5 is formed as a narrowing cross section in the vessel 1. The width 1 0 of the measurement window 5 is the thickness of the narrowing cross section and thereby generally less than the thickness of the vessel body 4. The height 11 of the measurement window 5 is less than half the height 13 of the vessel body 4. The vessel body 4 features a substantially oval cross section so as to increase the available volume of the vessel 1.

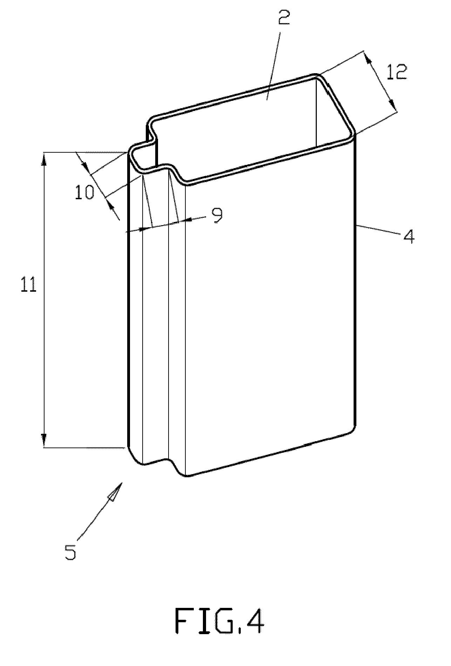

FIG. 4 illustrates an embodiment of the vessel 1 with a protruding measurement window 5 that is narrower than the vessel body 4. The width of the measurement window 10 is less than the width of the vessel body 4. The vessel 1 may be aligned in an upright, vertical position to enable a precise positioning in the measurement system. The height of the measurement window 11 is substantially equal to the height of the vessel 1. To encompass a reduced volume in the measurement window 5 the length of the measurement window 9 is preferably less than the width of the vessel body 12. The cross section of the vessel body 4 is substantially rectangular which increases the filling volume compared to a generally round cross section. The narrowing measurement window 5, however, ensures that during measurement especially on a centrifugal platform a sufficient sample volume is provided therein or at least moved thereto by rotation. The measurement window 5 in figure 4 preferably extends to the opening of the vessel 2. This shape of the vessel leads to a simple shape and simplifies the manufacturing especially with regard to the demolding of the vessel.

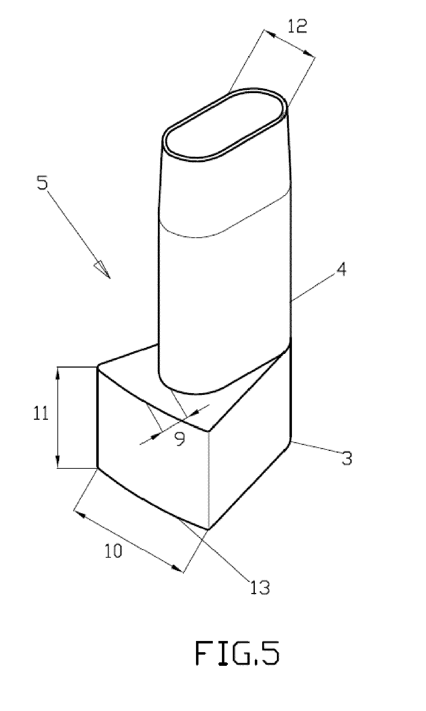

Fig. 5 illustrates an embodiment of the vessel 1 with a widening measurement window 5. The body of the vessel 4 features an elliptical cross section, whereby an increased overall vessel volume is provided compared to a round cross section. The measurement window 5 is arranged at the bottom of the vessel 3 and is designed with a width of the measurement window 10 that is more than the width of the vessel body 12. The measurement window 5 preferably widens gradually in an outward direction of the vessel. The distal end of the widened measurement window 13 is preferably aligned facing away from the center of rotation when the vessel is utilized on a centrifugal platform, to ensure that a sample is gathered therein or at least moved thereto during rotation. In order to encompass a reduced volume compared to the overall vessel volume, the height of the measurement window 11 is preferably less than half the height of the vessel 1. Likewise, the length of the measurement window 9 is preferably less than the width of the vessel body 12. The measurement signal is preferably detected via the distal wide end of the measurement window 5. The distal end of the measurement window 13 may be slightly rounded especially with a rounding radius substantially corresponding to the radius of vessel rotation. The measurement signal is preferably detected at the distal end of the widened measurement window 13. This results in the measurement signal being detected perpendicularly even when the vessel is being rotated, thereby reducing scattering influences.

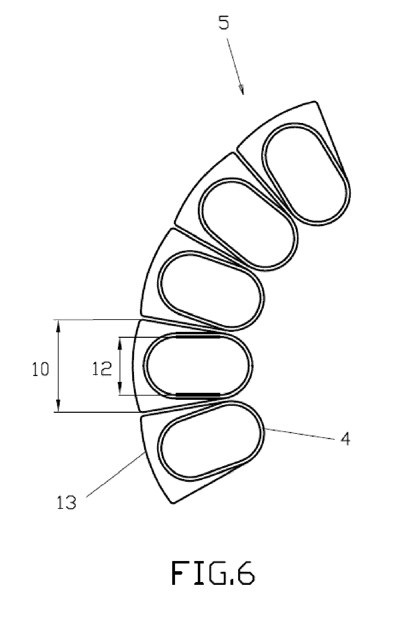

Fig. 6 illustrates a top view of an arrangement of several vessels with a widening measurement window 5 exemplified in figure 5. Several vessels 1 are arranged radially for measuring the vessels during rotation, for example on a centrifugal platform such as a thermocycler in PCR methods. Each vessel may be illuminated separately by an excitation signal as the vessel passes a source for excitation. Alternatively, several vessels may be illuminated simultaneously by a broad, even illumination. The measurement windows 5 of the vessels especially the distal ends 13 are preferentially aligned facing away from the center of rotation so as to allow the sample to fill out the measurement window 13 during rotation and subsequent measurements. The vessels are preferably arranged back-to-back reducing the empty space between the vessels so that the vessels can be arranged in a space efficient manner. A plurality of vessels may be connected to form a ring structure which can be easily handled for usage on a centrifugal platform. The widening of the measurement window 5 especially at the distal end 13 further prolongs the time window for the detection of the measurement signal during rotation of the vessels, thereby improving the signal acquisition.

## Claims

1. A vessel for measurements especially optical measurements comprising an opening (2), **characterised by** a reduced volume region (5) which is arranged in such a way that during measurement a sample is contained therein or at least moved thereto.

2. A vessel according to the preceding claim, wherein the reduced volume region (5) is adapted for transmission of an excitation (7) and/or measurement (8) signal to provide a measurement window (5).

3. A vessel according to any of the preceding claims, wherein the measurement window (5) is formed by a projecting and/or narrowing cross section of the vessel.

4. A vessel according to any of the preceding claims, wherein the measurement window (5) is formed by a projecting and/or widening cross section of the vessel.

5. A vessel according to the preceding claim, wherein the measurement window (5) is provided at the lower part of the vessel especially at the bottom of the vessel.

6. A vessel according to any of the preceding claims, wherein the width (10) of the measurement window (5) is less than the width (12) of the vessel body (4).

7. A vessel according to any of the preceding claims, wherein the length (9) of the measurement window (5) is less than the width (12) of the vessel body (4).

8. A vessel according to any of the preceding claims, wherein the height (11) of the measurement window (5) is less than half the height (13) of the vessel body (4).

9. A vessel according to any of the preceding claims, wherein the measurement window (5) encompasses a volume of 1 *µ*l to 50 *µ*l and/or less than 1/4 of the overall vessel volume.

10. A vessel according to any of the preceding claims, wherein the measurement window (5) comprises at least one substantially flat surface (6) adapted for transmission of an excitation and/or measurement signal.

11. A vessel according to any of the preceding claims, wherein the cross section of the vessel body (4) is substantially rectangular, elliptical and/or oval.

12. A method of using the vessel according to any of claims 1 -1 0, comprising:
providing a sample in the vessel,;
rotating the vessel on a centrifugal platform especially with the measurement window facing away from the center of rotation;
providing an excitation signal;
and detecting a measurement signal generated from the sample during rotation of the vessel.

13. A method according to the preceding claim, wherein the sample fills out the measurement window during rotation of the vessel for providing a consistent measurement volume.

14. A method of manufacturing a vessel for optical measurements according to any of claims 1-10, comprising:
providing a thermoplastic material;
preforming the material by injection molding;
disposing the preform in a mold for the final shape of the vessel;
and injecting a gaseous substance into the preform to mold the vessel;

15. A method according to the preceding claim, wherein the mold for the final shape of the vessel is a clam-shell construction.
